# EUROPÄISCHE PATENTANMELDUNG

(11) **EP 0 859 174 A1**
(43) Veröffentlichungstag der Anmeldung: **19.08.1998**
(21) Anmeldenummer: 98101259.4
(22) Anmeldetag: 26.01.1998
(51) Int. Cl.: F16J 15/32

(54) **Dichtring**

(30) Priorität: 13.02.1997 DE 19705409
(71) Anmelder: Firma Carl Freudenberg, 69469 Weinheim (DE)
(72) Erfinder: Dahlhaus-Preussler, Ulrich, 68535 Edingen-Neckarhausen (DE); Heinzelbecker, Rolf, 69469 Weinheim (DE)

(57) **Zusammenfassung**

Dichtring, aufweisend einen Versteifungsring (1) und ein daran angeordnetes Dichtelement (2) aus elastomerem Material, mit einer an dem Dichtelement (2) ausgebildeten ersten Dichtlippe (7), welche mit einer Anpreßkraft auf einem abzudichtenden Bauteil (10) aufliegt, und einer weiteren zur ersten Dichtlippe (7) axial beabstandeten zweiten Dichtlippe (8), wobei die zweite Dichtlippe (8) über radiale Stege (13) mit dem restlichen Dichtelement (2) verbunden ist und wobei die Stege (13) derart ausgeführt sind, daß sie bei Druckbelastung nachgiebig und bei Zugbelastung eine relativ hohe Steifigkeit aufweisen.

## Beschreibung

### Technisches Gebiet

Die hier betrachteten Dichtringe dienen insbesondere zur Abdichtung von einer Welle durchbrochenen Gehäusewand. Dabei kann zwischen Welle und Gehäusewand eine Relativbewegung vorliegen, dies ist aber nicht zwingend erforderlich.

### Stand der Technik

Ein derartiger Dichtring ist aus der DE-AS 26 43 229 bekannt. Dieser Dichtring weist einen Versteifungsring und ein Dichtelement auf, wobei an letzterem eine federbelastete Dichtlippe ausgebildet ist, welche die Welle dichtend umschließt. Zur Gewährleistung einer ausreichenden Dichtheit selbst bei radialen Schwingungen ist die Dichtlippe über einen Stützring oder Stützrippen gegen Aufspreizen gesichert.

Innerbetrieblicher Stand der Technik ist weiterhin ein Dichtring, der eine zusätzliche Dichtlippe aufweist, die zu der ersten Dichtlippe axial beabstandet ist. Beide Dichtlippen sind auf sich in entgegengesetzter Richtung axial erstreckenden Schenkeln angeordnet. Eine Dichtlippe ist durch eine unter Vorspannung stehende Zugfeder belastet und weist gegenüber der abdichtenden Welle eine relativ große Überdeckung auf. Dieses ist die Hauptdichtung. Die andere Dichtlippe wird als Staubdichtung bezeichnet und soll die Funktionsfähigkeit der Hauptdichtung für einen langen Zeitraum gewährleisten.

Problematisch bei dieser Dichtung ist die Montage auf der Welle. Durch die von einem gemeinsamen Mittelteil ausgehenden, sich in entgegengesetzter Richtung erstreckenden Schenkel, die unter einem Winkel zur Wellenoberfläche verlaufen, ist leicht verständlich, daß beim Verschieben des Dichtrings auf der Welle eine Dichtlippe gezogen, die andere geschoben wird. Dabei besteht die Gefahr, daß die geschobene Dichtlippe aufgrund der Reibung ganz oder abschnittsweise umklappt und somit ihre Wirkung verliert.

Die Gefahr des Umklappens besteht insbesondere bei einem zur Außenfläche der Welle steil stehenden, die Dichtlippe tragenden Schenkel. Diese Gefahr wächst dann, wenn eine hohe Überdeckung vorgesehen ist, d.h. wenn der Innendurchmesser der Dichtlippe gegenüber dem Außendurchmesser der Welle deutlich geringer ist. Bislang wird daher bei einer steilen Anordnung des Schenkels eine geringe Überdeckung in Kauf genommen oder es wird ganz auf eine Überdeckung verzichtet.

Ist eine große Überdeckung beabsichtigt, so wird bisher nur ein zur Wellenoberfläche flach stehender Schenkel in Betracht gezogen. Dieser Lösung ist aber durch den zur Verfügung stehenden axialen Bauraum eine Grenze gesetzt.

Insbesondere dann, wenn die Dichtung nach der Montage nicht mehr sichtbar ist, ist eine Kontrolle unmöglich und es kann zu einer deutlich verkürzten Lebensdauer der Dichtung kommen, wenn die eine Dichtlippe umgestülpt wurde.

Aufgabe der Erfindung ist es, einen derartigen Dichtring so auszugestalten, daß bei einer relativ steilstehenden Dichtlippe mit erhöhter Überdeckung die Gefahr einer Umstülpung einer Dichtlippe beim Einbau beseitigt ist.

### Darstellung der Erfindung

Gemäß der Erfindung ist die zweite Dichtlippe über radiale Stege mit dem restlichen Dichtelement verbunden, wobei die Stege derart ausgeführt sind, daß sie bei Druckbelastung relativ nachgiebig sind und beiZugbelastung eine relativ hohe Steifigkeit aufweisen.

Mit der erfindungsgemäßen Losung ist es möglich, steil stehende Dichtlippen tragende Schenkel vorzusehen, welche gegenüber den bislang verwendeten Schenkeln eine deutlich größere Überdeckung aufweisen und damit eine sicherere Abdichtung ermöglichen. Wird der Dichtring auf der Welle in axialer Richtung bewegt und der die Dichtlippe tragende Schenkel auf der Welle entlang geschoben, so wirken die auf Zug belasteten Stege einem Umklappen entgegen, da sie dem Umklappen eine relativ hohe Steifheit entgegensetzen.

Ein Einsatz der erfindungsgemäßen Dichtung an Stellen, wo eine Sichtkontrolle der ordnungsgemäßen Montage der Dichtung nicht möglich ist wird nunmehr möglich.

Vorteilhafterweise ist die zweite Dichtlippe mit gegenüber der ersten Dichtlippe geringerer Anpreßkraft auf. Hierdurch wird eine leichte Verschiebbarkeit der Dichtung auf der Welle begünstigt.

Zur Erreichung einer kurzen Baulänge ist es vorteilhaft, wenn die zweite Dichtlippe in einem Winkel von 45 bis 85° zur Mittelachse steht.

Eine Weiterbildung des Dichtrings mit einer Überdeckung der Dichtlippe von 2 bis 5 % des Abstandes zur Mittelachse erschließt Bereiche, die bislang wegen der Gefahr von Montagefehlem nicht möglich waren.

### Kurzbeschreibung der Zeichnung

Ein Ausführungsbeispiel der Erfindung ist in der Zeichnung dargestellt. Es zeigt:
Fig. 1 eine Dichtung im Längsschnitt und
Fig. 2 die in Fig. 1 dargestellte Dichtung in Draufsicht von links.

### Ausführung der Erfindung

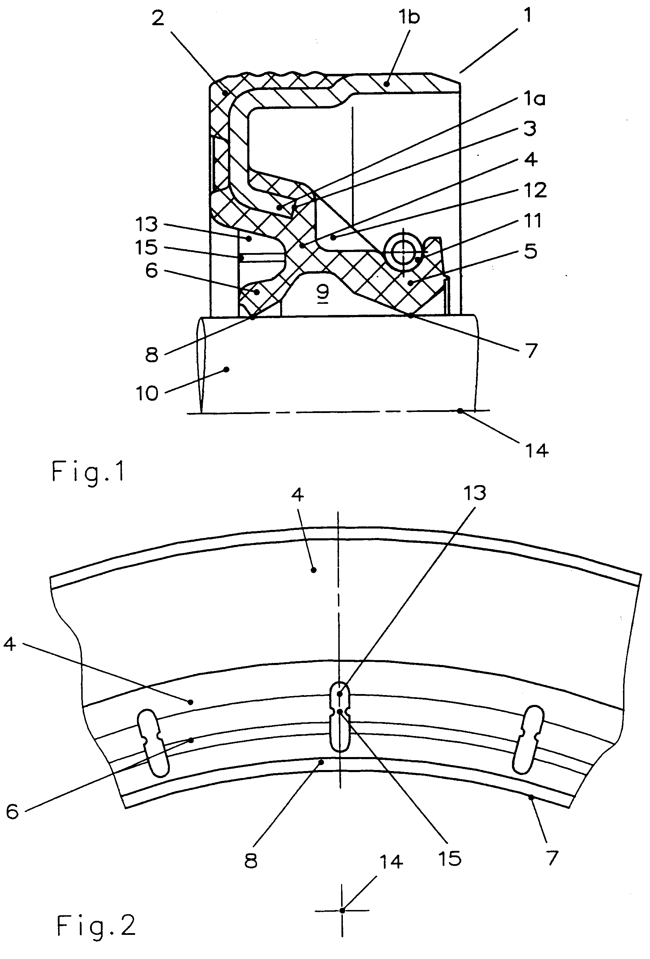

Der in Fig. 1 dargestellte Dichtring umfaßt einen näherungsweise U-förmigen Versteifungsring 1 und ein den Versteifungsring 1 zumindest teilweise umkleidendes Dichtelement 2 aus elastomerem Werkstoff. Der aus metallischem Werkstoff bestehende Versteifungsring 1 weist im Profil einen radial innenliegenden, sich in axialer Richtung erstreckenden kurzen Schenkel 1a auf. Der radial außen liegende Schenkel 1b ist zum Teil von dem Dichtelement 2 umkleidet.

Am Ende 3 des Schenkels 1a weist das Dichtelement 2 einen radial nach innen gerichteten Versatz 4 auf, an welchem sich axial erstreckende Schenkel 5, 6 des Dichtelements befinden. An den Schenkein 5, 6 ist jeweils eine Dichtlippe 7, 8 angeformt, zwischen welchen ein Raum 9 begrenzt wird, welcher mit Fett gefüllt werden kann. Weiterhin begrenzt eine Welle 10 den Raum 9.

Der Schenkel 5 ist mit einer der Dichtlippe 7 gegenüberliegend angeordneten Zugfeder 11 versehen, welche durch ihre Vorspannung die Dichtlippe 7 gegen die Welle 10 preßt. Dabei weist die Dichtlippe 7 eine Überdeckung gegenüber der Welle 10 auf, wodurch die Zugfeder 11 nach der Montage des Dichtrings und der Aufweitung auf das Außenmaß der Welle 10 eine weitere Anpreßkraft aufbringt.

Um die Steifigkeit des Schenkels 5 gegen Aufspreizung zu erhohen, sind über den Umfang verteilte Stützrippen 12 vorgesehen. Diese Stützrippen 12 erstrecken sich von der Rückseite des Schenkels 5 bis zum umkleideten Ende 3 des Versteifungsringes 1. Die Stützrippen 12 sind einstückig an das Dichtelement angeformt und begrenzen zudem die Gelenkfunktion des Versatzes 4.

Der vordere Schenkel 6 weist Stege 13 zum umkleideten Schenkel 1a hin auf, so daß im Bereich der eine Staublippe bildenden Dichtlippe 8 das Dichtelement U-förmig gestaltet ist. Damit wird ein ausreichender Abstand zur Anbringung der Stege 13 sichergestellt. Im Gegensatz zu den Stützrippen 12 sind die Stege 13 derart ausgeführt, daß sie bei Druckbelastung relativ nachgiebig sind und bei Zugbelastung eine relativ hohe Steifigkeit aufweisen.

Die Stege 13 sind deswegen druckweich, damit sie nach dem Verbinden des Dichtelements 2 mit dem Versteifungsring 1 in einer Form aus eben dieser Form herausgenommen werden können, obwohl der vordere Schenkel 6 in einer Hinterschneidung der Form liegt. Bei der Entnahme der Dichtung in bezüglich der Mittelachse 14 axialer Richtung wird der Schenkel 6 daher bereits erstmalig verformt und die Stege 13 um etwa 50 % zusammengedrückt.

Obwohl die Stege 13 druckweich sind, wird jedoch zusammen mit der erhöhten Überdeckung eine verbesserte Dichtwirkung der zweiten Dichtlippe 8 erzielt. Die erhöhte Überdeckung führt nämlich dazu, daß die Dichtlippe 8 stärker aufgeweitet wird, wodurch die Dichtlippe unter Vorspannung steht. Diese Vorspannung erzeugt bezüglich der Welle eine Dichtkraft. Die verbesserte Abdichtfunktion gegen Staub erhöht die Lebendauer der Dichtung.

Die Montage des Dichtrings auf der Welle 10 erfolgt durch Aufschieben des Dichtrings auf die Welle 10 von der rechten Seite her. Dabei besteht besonders bei einem steilen Schenkel 6 grundsätzlich die Gefahr des Umstülpens des Schenkels 6, so daß hier nur eine geringe Überdeckung und damit nur ein geringer Ausgleich von Fertigungstoleranzen möglich wäre. Durch die Vorsehung der Stege 13 wird die Steifigkeit des Schenkels 6 bei Zugbelastung erhöht, so daß bei Beibehaltung eines kompakten Bauraums eine größere Überdeckung ohne die Gefahr des Umklappens ermöglicht wird.

In Fig. 2 ist die Verteilung der Stützrippen 13 über den Umfang noch deutlicher dargestellt. Die Draufsicht zeigt das Dichtelement 2 mit einem tiefergelegenen Versatz 4 und sich von diesem wieder nach vorne erstreckenden Schenkel 6. Der Schenkel 6 ist über die Stützrippe 13 abgestützt und trägt die Dichtlippe 8.

Der Steg 13 ist mit parallelen Seitenwänden ausgeführt, der bei Druckbelastung auch seitlich ausknicken kann. Hierzu können auf dem Steg 13 bestimmte Knickstellen, beispielsweise in Form von Rinnen 15, vorgesehen werden.

## Patentansprüche

1. Dichtring, aufweisend einen Versteifungsring (1) und ein daran angeordnetes Dichtelement (2) aus elastomerem Material, mit einer an dem Dichtelement (2) ausgebildeten ersten Dichtlippe (7), welche mit einer Anpreßkraft auf einem abzudichtenden Bauteil (10) aufliegt, und einer weiteren zur ersten Dichtlippe (7) axial beabstarideten zweiten Dichtlippe (8), **dadurch gekennzeichnet,** daß die zweite Dichtlippe (8) über radiale Stege (13) mit dem restlichen Dichtelement (2) verbunden ist, wobei die Stege (13) derart ausgeführt sind, daß sie bei Druckbelastung nachgiebig und bei Zugbelastung eine relativ hohe Steifigkeit aufweisen.

2. Dichtung nach Anspruch 1, dadurch gekennzeichnet, daß die zweite Dichtlippe (8) gegenüber der ersten Dichtlippe (7) mit geringerer Anpreßkraft aufliegt.

3. Dichtring nach Anspruch 1 oder 2, dadurch gekennzeichnet, daß eine zweite Dichtlippe (8) tragender Schenkel (6) in einem Winkel von 45 bis 85° zur Mittelachse (14) steht.

4. Dichtring nach einem der Ansprüche 1 bis 3, dadurch gekennzeichnet, daß die Dichtlippe ( 8) eine Überdeckung von 2 bis 5 % des Abstandes zur Mittelachse (14) aufweist.
